# EUROPEAN PATENT APPLICATION

(11) **EP 1 203 644 A2**
(43) Date of publication of application: **08.05.2002**
(21) Application number: 01125355.6
(22) Date of filing: 29.10.2001
(51) Int. Cl.: B26F 1/44

(54) **Dual hardness die**

(30) Priority: 03.11.2000 US 706499
(71) Applicant: Wilson Manufacturing Company, St. Louis, Missouri 63123 (US)
(72) Inventor: Karez, Pavel, St. Louis, Missouri 63123 (US)
(74) Representative: Maiwald Patentanwalts GmbH

(57) **Abstract**

Generally, a rotary cutting die of the present invention for use in combination with an anvil roll to cut sheet material has a generally cylindrical body extending along a central axis between opposite first and second ends. The body has a Rockwell C scale hardness less than about 50. A cutting blade extends outward from the body to a tip adapted for cutting sheet material passing between the die and the anvil roll. First and second circular bearing surfaces are coaxially positioned adjacent one of the first and second ends of the body for engaging the anvil roll to maintain a predetermined spacing between the cutting blade tip and the anvil roll. The first and second bearing surfaces have a Rockwell C scale hardness greater than about 50.

## Description

### Background of the Invention

This invention relates generally to rotary cutting dies suitable for cutting sheet material and more particularly to a rotary cutting die having portions with different hardnesses and an improved method of manufacturing such rotary cutting dies.

Rotary cutting dies are commonly used to cut sections from sheet material such as paper, plastics and foils. Such cutting dies typically employ a rotating cutting die and a rotating anvil roll mounted in parallel on a cutting die press. The rotary cutting die usually comprises a solid, cylindrical body having one or more cutting blades thereon. As sheet material passes between the rotary cutting die and the anvil roll, the cutting blades cut the material. The blades may either cut sections completely out of the material or, in certain operations such as the manufacturing of labels, the blades may cut only partially through the material. Rotary cutting dies normally have journal shafts protruding axially from opposite ends of the body for mounting a mating gear and for rotatably mounting the die in the cutting die press. The mating gear meshes with a gear on the press to drive the rotary cutting die. The anvil roll also has a mating gear causing the die and roll to rotate simultaneously in opposite directions. Typically, rotary cutting dies also have circular bearing surfaces or lands having diameters equal to or slightly larger than the tips of the cutting blades. These bearing surfaces ensure a constant distance between the anvil roll axis and the rotary cutting die axis thereby controlling the distance between the anvil roll and the cutting blades of the die.

Rotary cutting dies are traditionally manufactured by first turning steel bar stock on a lathe to a rough shape. This process creates a cylindrical body having bearing surfaces and journal shafts. Cutting blades are then machined on the body to a rough shape, usually by means of a computerized numerical control (CNC) machining center with multiple axes. Next, the entire die is heat treated to a Rockwell C scale hardness greater than about 50. This heat treatment typically causes distortion. Therefore, following heat treatment the bearing surfaces and journal shafts must be ground to their finished dimensions on a cylindrical grinder and the cutting blades must be sharpened, usually by hand. Finally, the entire die is chrome plated for appearance and to provide the die with a protective coating.

Traditional methods of manufacturing rotary cutting dies are disadvantageous because the cutting blades must be sharpened after the die is heat treated. Heat treatment of the rotary cutting die is performed to bring the die, including the cutting blades, to a hardness sufficient to increase durability. More particularly, this hardening process is performed to increase the normal life of the cutting blades and to ensure the blades are strong enough to easily cut the selected sheet material. However, after heat treatment the rotary cutting die is hard enough to cause difficulties during machining. Further, because the blades must be sharpened to their finished dimensions after heat treatment, the total machining time and number of operations are greater than they would be if heat treatment could be avoided.

Therefore, there is a need for a method of manufacturing rotary cutting dies that is simpler and more economical than previous methods of manufacturing rotary cutting dies.

### Summary of the Invention

Among the several objects and features of the present invention may be noted the provision of a rotary cutting die including cutting blades having an extended life; and the provision of a method of manufacturing rotary cutting dies having a reduced cost and time compared to conventional methods.

Generally, a rotary cutting die of the present invention is used in combination with an anvil roll to cut sheet material. The die comprises a generally cylindrical body extending along a central axis between opposite first and second ends. The body has a Rockwell C scale hardness less than about 50. A cutting blade extends outward from the body to a tip adapted for cutting sheet material passing between the die and the anvil roll. First and second circular bearing surfaces are coaxially positioned adjacent the first and second ends of the body for engaging the anvil roll to maintain a predetermined spacing between the cutting blade tip and the anvil roll. The first and second bearing surfaces have a Rockwell C scale hardness greater than about 50.

In another aspect, the present invention includes a method of manufacturing a rotary cutting die comprising the step of heat treating a bearing surface of the die to a Rockwell C scale hardness greater than about 50 while maintaining a body of the die at a Rockwell C scale hardness less than about 50.

In yet another aspect of the present invention, a method of manufacturing a rotary cutting die comprises the step of applying chrome plating to the blade tip to a maximum thickness of greater than about 0.0004 inches.

Other objects and features of the present invention will be in part apparent and in part pointed out hereinafter.

### Brief Description of the Drawings

Fig. 1 is a front elevation of a rotary cutting die of the present invention in combination with an anvil roll;
Fig. 2 is a partially separated perspective of the rotary cutting die in combination with the anvil roll; and
Fig. 3 is a section taken along line 3-3 of Fig. 1 showing cutting blades and thick chrome plating on the die of the present invention.

Corresponding reference characters indicate corresponding parts throughout the several views of the drawings.

### Detailed Description of the Preferred Embodiment

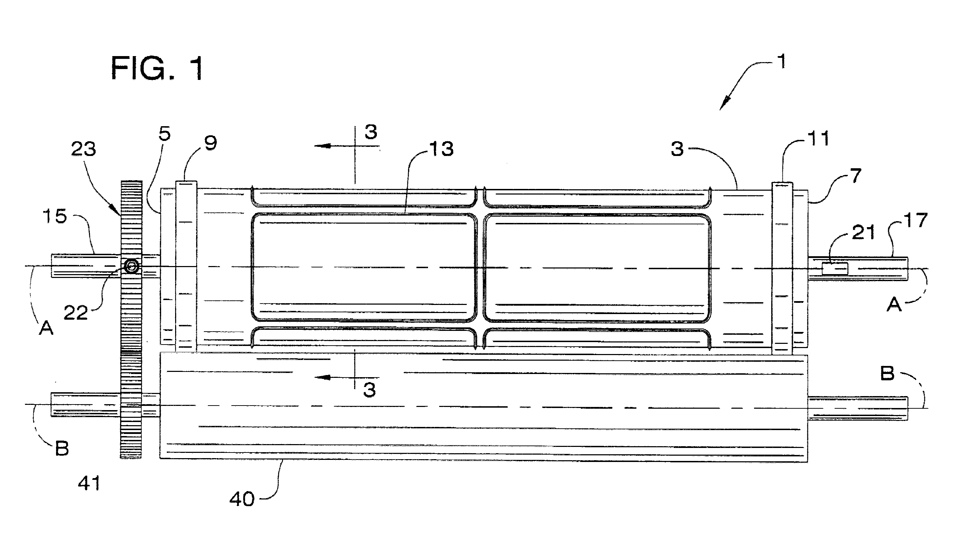

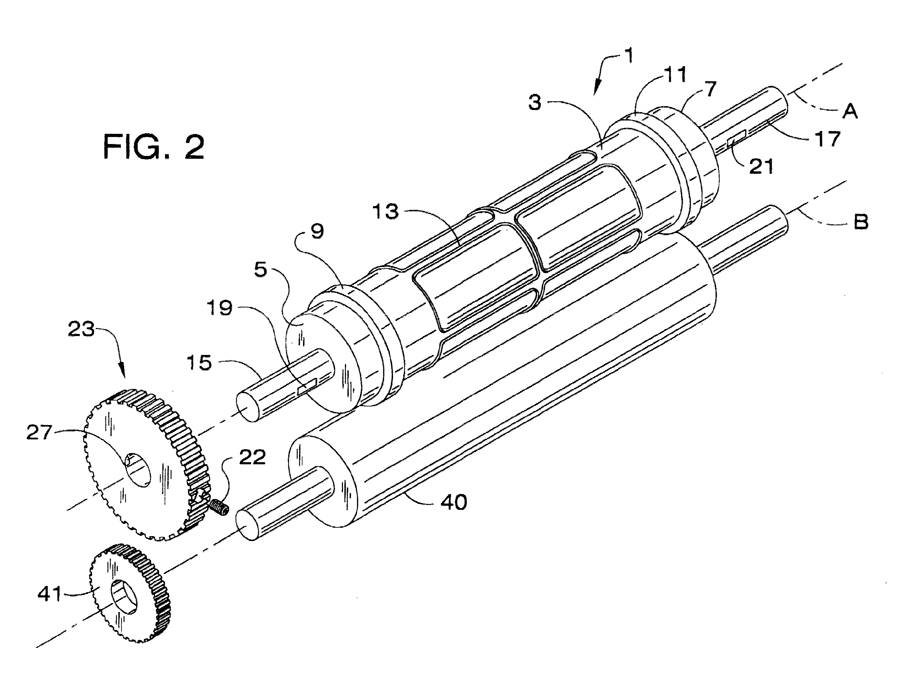

Referring now to the drawings, and in particular to Figures 1 and 2, a rotary cutting die of the present invention for cutting sections from sheet material is generally referred to by the reference numeral 1. The die 1 comprises a generally cylindrical body 3 extending along a central axis A between a first end 5 and a second end 7. The body 3 has a substantially constant diameter along its entire length excluding circular bearing surfaces or lands 9, 11 positioned adjacent the ends 5, 7 of the body. At least one cutting blade 13 extends outward from the surface of the body to a tip. Opposite journal shafts 15, 17 extend axially from the first and second ends 5, 7, respectively, of the body 3. The tip of each cutting blade 13 traces an outline of the shape which is desired to be cut from the material. The number of cutting blades used depends on the number of sections desired. Although a plurality of cutting blades are described with respect to the disclosed embodiment, it will be understood that the rotary cutting die may have only one cutting blade without departing from the scope of the present invention. The journal shafts 15, 17 are coaxial with the body 3 and have a diameter generally equal to one another and substantially constant. The body 3 is of a larger diameter than the journal shafts 15, 17.

The journal shafts 15, 17 include flats 19, 21, respectively, which cooperate with a set screw 22 to fasten a mating gear 23 to the rotary cutting die 1. The mating gear 23 has a central hole 27 sized for receiving the corresponding journal shaft 15, 17 so it abuts the corresponding end 5, 7 of the body 3. Once the mating gear 23 is in place, the set screw 22 is tightened against the corresponding flat 19, 21 to hold the mating gear and the rotary cutting die 1 in driving engagement to ensure they rotate together without slipping. It is envisioned that other means of holding the gear on the shaft (e.g., bolt circles) may be used without departing from the scope of the present invention.

The journal shafts 15, 17 enable the rotary cutting die 1 to be rotatably mounted on a conventional cutting die press (not shown) and are sized and shaped suitably therefor. A drive gear (not shown) of the conventional cutting die press meshes with the mating gear 23 to rotate the rotary cutting die 1. A conventional anvil roll 40, shown in Figures 1 and 2, is mounted on the conventional cutting die press parallel to the rotary cutting die 1 and includes an anvil roll gear 41 that meshes with the mating gear 23 causing the anvil roll and rotary cutting die 1 to rotate simultaneously in opposite directions. Alternatively, the anvil roll gear 41 may mesh with the drive gear of the conventional cutting die press to rotate the anvil roll 40 and therefore the rotary cutting die 1.

The bearing surfaces 9, 11 are circular and have a larger diameter than the body 3. The diameter of the bearing surfaces 9, 11 is equal to or slightly greater than the diameter of the tips of the cutting blades 13. For example, in one embodiment, the body 3 has a diameter of about 3 inches, the bearing surfaces 9, 11 have diameters of about 3.060 inches and the cutting blades 13 have a diameter of about 3.054 inches. The bearing surfaces 9, 11 engage the anvil roll 40 and ensure a constant distance between the anvil roll axis B and the axis of the body 3 thereby controlling the distance between the anvil roll 40 and the tips of the cutting blades 13.

In operation, a continuous sheet or web of material, such paper, cardboard, plastic or foil, passes between the rotary cutting die 1 and the anvil roll 40 as they rotate and the cutting blades 13 cut sections of material from the web. Frequently, the cutting blades 13 cut sections completely out of the material. However, in certain operations such as the manufacture of labels, the cutting blades may cut only partially through the material.

The rotary cutting die 1 is formed from a piece of round bar stock of steel such as AISI 4150 medium carbon steel having a Rockwell C scale hardness of about 20.5. A conventional machine tool, such as a lathe, is used to machine the bearing surfaces 9, 11, the journal shafts 15, 17, and the first and second ends 5, 7 of the body 3. Next, the flats 19, 21 are machined into the journal shafts 15, 17 using a suitable cutting tool such as an end mill.

After initial machining of the rotary cutting die 1 is complete, the journal shafts 15, 17 and the bearing surfaces 9, 11 are hardened by heating them to an elevated temperature, typically about 1000°F to 1400°F, and then quenching them. Preferably, the bearing surfaces 9, 11 and the journal shafts 15, 17 are heat treated using a conventional induction heating method wherein the rotary cutting die 1 is placed inside a wound coil subjected to alternating current. The changing magnetic field produced by current passing through the coil induces an electrical current in selected portions of the rotary cutting die (e.g., the journal shafts 9, 11 and the bearing surfaces 15, 17). The current heats the surface layers of the die by electrical resistance. As will be appreciated by those skilled in the art, the rate and the depth of the heat treatment can be controlled by the amperage and frequency of the electrical current passed through the coil. This method of heating is very efficient and heating rates are extremely rapid. Thus, the cost and operation time are relatively low. Further, it is envisioned that this heat treatment method can be automated for greater accuracy and to provide highly reproducible results. Induction heating is also advantageous because it produces very little distortion due to the rigidity of the cool interior of the body 3 and because it facilitates hardening selected surface areas without affecting other surfaces areas (e.g., the body 3). As will be understood by those skilled in the art, other suitable selective heat treatment techniques may be employed, such as flame hardening, electron beam hardening or the use of a laser beam having a beam size, intensity and scanning speed sufficient to produce adequate hardness.

After heating, the journal shafts 9, 11 and the bearing surfaces 15, 17 are preferably quenched by submersing them in a suitable quenching liquid. However, other methods of quenching may be used if desired. This hardening process provides the bearing surfaces 9, 11 and the journal shafts 15, 17 with a Rockwell C scale hardness greater than about 50 without hardening the body 3 of the rotary cutting die 1 thereby maintaining the body at a Rockwell C scale hardness less than about 50. Preferably, the bearing surfaces 9, 11 and the journal shafts 15, 17 are heat treated to a Rockwell C scale hardness greater than 54, and more preferably between about 57 and 59, and the body 3 is maintained at a Rockwell C scale hardness less than about 21.

After heat treatment is complete, the bearing surfaces 9, 11 and the journal shafts 15, 17, including the flats 19, 21, are ground to their finished dimensions. Preferably, grinding is performed on a cylindrical external-grinding machine for maximum accuracy. However, it will be understood that any suitable grinding process producing finished surfaces of the required dimensions and tolerances may be employed. For example, the process may include use of a tool-post grinder on a conventional lathe, grinding by hand on a pedestal or bench grinder, or the use of grinding wheels mounted on portable, high speed electric or air motors.

Also following heat treatment, the cutting blades 13 are machined to the desired shape from the body 3 of the rotary cutting die 1 using a suitable cutting tool. This process produces the cutting blades 13 in their finished shape and dimensions. Because the cutting blades 13 are not heat treated, they are not subjected to distortion and therefore no sharpening is required. Preferably, the cutting blades 13 are machined with an end mill or frusto conical milling cutter using a computerized numerical control (CNC) machining center with multiple axes. However, it will be understood that any suitable machine tool or machining process may be employed, such as column and knee, turret, or bed type milling machines. Alternatively, it will be understood that the cutting blades 13 may be machined prior to grinding the bearing surfaces 9, 11 and the journal shafts 15, 17. Further, it will also be understood that the cutting blades 13 may be machined prior to heat treatment of the bearing surfaces 9, 11 and the journal shafts 15, 17 without departing from the scope of the present invention.

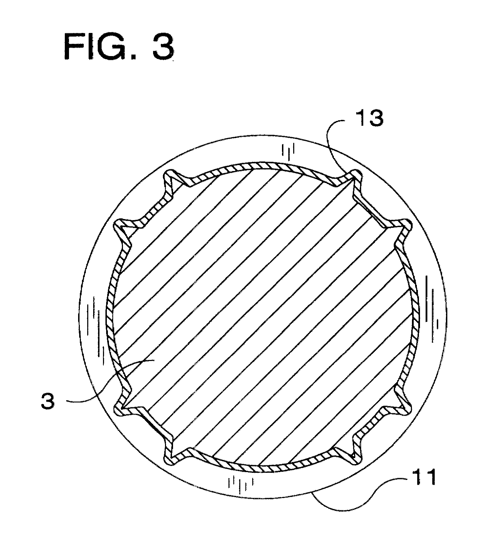

Finally, the entire rotary cutting die 1 is chrome plated to enhance the wear resistance of the unhardened cutting blades 13. Preferably, the die is subjected to the chrome plating for an extended period of time (e.g., about 20 minutes) compared to previous conventional methods of manufacturing rotary cutting dies. This provides chrome plating with a maximum thickness greater than about 0.0004 inches, and more preferably greater than about 0.0007 inches. As shown in Fig. 3, the maximum thickness of the chrome plating occurs at the tips of the cutting blades 13. Preferably, this thickness is about 0.001 inches to provide the blades with sufficient hardness. Although the plating may have other hardnesses without departing from the scope of the present invention, in one embodiment the plating has a hardness of between about 1000 and about 1150 measured on a KHN100 microhardness scale. Further, although chrome plating is used in one embodiment, other hardfacing techniques such as TIN, TICN and TIALN may be used without departing from the scope of the present invention.

Dies 1 of the present invention have a blade height H of about 0.020 inches to about 0.040 inches and more preferably about 0.030 inches after plating as compared to conventional blades which have a height of about 0.050 inches. As will be appreciated by those skilled in the art, shorter blades provide more evenly distributed plating and sharper finished blade tips because of the enhanced electromagnetic properties associated with the shorter blades.

It will be apparent from the foregoing that the method of manufacturing a rotary cutting die described above has many advantages. First, by heat treating only the bearing surfaces 9, 11 and the journal shafts 15, 17, the present method produces a rotary cutting die having bearing surfaces and journal shafts with a Rockwell C scale hardness greater than about 50 and a body with a Rockwell C scale hardness less than about 50. Because the body 3 is not hardened, the cutting blades 13 can be machined from the body after heat treatment of the bearing surfaces 9, 11 and the journal shafts 15, 17, if desired. Furthermore, because the body 3 and the cutting blades 13 are not subjected to heat treatment, they do not distort after initial machining. Thus, the cutting blades 13 can be machined in a single operation and do not require extra sharpening to bring them to their finished dimensions. This reduces the cost and time required to manufacture the rotary cutting die 1. Also, by providing thick chrome plating on the surface of the rotary cutting die 1, the present method gives the cutting blades 13 sufficient hardness so they do not exhibit significant wear despite being heat treated. This thick chrome plating thereby gives the cutting blades a_longer useful life with respect to prior methods of manufacturing rotary cutting dies (e.g., about 5 million cutting revolutions as compared to about 2 million cutting revolutions). Finally, because only the bearing surfaces 9, 11 and the journal shafts 15, 17 are heat treated, the rotary cutting die can be manufactured from steel which is not heat treated before initial machining and therefore is relatively inexpensive and easily machinable.

In view of the above, it will be seen that the several objects of the invention are achieved and other advantageous results attained.

Although the method of the present invention applies to the manufacturing of rotary cutting dies as herein described, the method is not limited to such rotary cutting dies and may be applied to the manufacture of any rotary cutting die having a generally cylindrical body with at least one bearing surface thereon.

When introducing elements of the present invention or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements.

As various changes could be made in the above constructions without departing from the scope of the invention, it is intended that all matter contained in the above description or shown in the accompanying drawings shall be interpreted as illustrative and not in a limiting sense.

## Claims

1. A rotary cutting die for use in combination with an anvil roll to cut sheet material, said die comprising:
a generally cylindrical body extending along a central axis between opposite first and second ends, said body having a Rockwell C scale hardness less than about 50;
a cutting blade extending outward from the body to a tip adapted for cutting sheet material passing between the die and the anvil roll; and
first and second circular bearing surfaces, each of said first and second bearing surfaces being coaxially positioned adjacent one of said first and second ends of the body for engaging the anvil roll to maintain a predetermined spacing between the cutting blade tip and the anvil roll, said first and second bearing surfaces having a Rockwell C scale hardness greater than about 50.

2. A rotary cutting die as set forth in claim 1 further comprising opposite first and second cylindrical journal shafts, each of said first and second journal shafts being coaxial with said body and extending axially from one of said first and second ends for rotatably mounting the die adjacent the anvil roll, said first and second journal shafts having a Rockwell C scale hardness greater than about 50.

3. A die as set forth in claim 2 wherein said first and second bearing surfaces and said first and second journal shafts have a Rockwell C scale hardness greater than about 54.

4. A die as set forth in claim 1 wherein said first and second bearing surfaces have a Rockwell C scale hardness greater than about 54.

5. A die as set forth in claim 4 wherein said first and second bearing surfaces have a Rockwell C scale hardness between about 57 and about 59.

6. A die as set forth in claim 1 wherein the body has a Rockwell C scale hardness less than about 21.

7. A die as set forth in claim 1 wherein the cutting blade includes a layer of hardfacing.

8. A die as set forth in claim 7 wherein the hardfacing is a chrome plating having a maximum thickness greater than about 0.0004 inches.

9. A method of manufacturing a rotary cutting die for use in combination with an anvil roll to cut sheet material, said die having a generally cylindrical body, a cutting blade extending outward from the body to a tip for cutting sheet material passing between the die and the anvil roll, and first and second bearing surfaces, each of said surfaces being mounted adjacent one end of the body for engaging the anvil roll to maintain a predetermined spacing between the cutting blade tip and the anvil roll, said method comprising the step of heat treating said bearing surfaces to a Rockwell C scale hardness greater than about 50 while maintaining said body at a Rockwell C scale hardness less than about 50.

10. A method of manufacturing a rotary cutting die as set forth in claim 9 wherein said rotary cutting die further comprises opposite first and second journal shafts, each of said shafts being positioned adjacent one of said bearing surfaces for rotatably mounting the die adjacent the anvil roll, and said method further comprises the step of heat treating said journal shafts to a Rockwell C scale hardness greater than about 50 while maintaining said body at a Rockwell C scale hardness less than about 50.

11. A method of manufacturing a rotary cutting die as set forth in claim 10 further comprising the step of heat treating said bearing surfaces and said journal shafts to have a Rockwell C scale hardness greater than about 54.

12. A method of manufacturing a rotary cutting die as set forth in claim 11 further comprising the step of heat treating said bearing surfaces and said journal shafts to have a Rockwell C scale hardness between about 57 and 59.

13. A method of manufacturing a rotary cutting die as set forth in claim 9 further comprising the step of heat treating said bearing surfaces to have a Rockwell C scale hardness greater than about 54.

14. A method of manufacturing a rotary cutting die as set forth in claim 13 further comprising the step of heat treating said bearing surfaces to have a Rockwell C scale hardness between about 57 and 59.

15. A method of manufacturing a rotary cutting die as set forth in claim 9 wherein the body has a Rockwell C scale hardness less than about 21.

16. A method of manufacturing a rotary cutting die as set forth in claim 9 further comprising the step of machining the heat treated bearing surfaces to their final dimensions.

17. A method of manufacturing a rotary cutting die as set forth in claim 16 further comprising the step of machining the body to form the cutting blade.

18. A method of manufacturing a rotary cutting die as set forth in claim 17 further comprising the step of hardfacing the cutting blade.

19. A method of manufacturing a rotary cutting die as set forth in claim 18 wherein the body is hardfaced with a chrome plating applied to a maximum thickness greater than about 0.0004 inches.

20. A method of manufacturing a rotary cutting die for use in combination with an anvil roll to cut sheet material, said die having a generally cylindrical body, a cutting blade extending outward from the body to a tip adapted for cutting sheet material passing between the die and the anvil roll, and first and second bearing surfaces, each of said surfaces being mounted adjacent one end of the body for engaging the roll to maintain a predetermined spacing between the cutting blade tip and the roll, said method comprising the step of maintaining the body at a Rockwell C scale hardness less than about 50, and hardfacing the blade tip to a maximum thickness of greater than about 0.0004 inches.
